# FASCICULE DE BREVET EUROPEEN

(11) **EP 3 269 000 B1**
(45) Date de publication et mention de la délivrance du brevet: **01.05.2019**
(21) Numéro de dépôt: 16711878.5
(22) Date de dépôt: 08.03.2016
(51) Int. Cl.: H01M 8/0273, H01M 8/247, H01M 8/248, H01M 8/1018, H01M 8/0252, H01M 8/0267, H01M 8/24, H01M 8/10

(54) **PILE À COMBUSTIBLE PRÉSENTANT UNE STRUCTURE RENFORCÉE**
BRENNSTOFFZELLENSTAPEL MIT VERSTÄRKTER STRUKTUR
FUEL-CELL STACK HAVING A REINFORCED STRUCTURE

(30) Priorité: 09.03.2015 FR 1551950
(43) Date de publication de la demande: 17.01.2018
(73) Titulaire: Safran Power Units, 31200 Toulouse (FR)
(72) Inventeur: HORDE, Théophile, 31300 Toulouse (FR); BOUDJEMAA, Fabien, 31130 Balma (FR)
(74) Mandataire: Gilbey, Vincent
(86) Numéro de dépôt international: PCT/FR2016/050530
(87) Numéro de publication internationale: WO 2016/142619

(56) Documents cités:
- WO-A1-2006/093061
- JP-A- 2006 147 255
- US-A- 4 604 331
- US-A1- 2005 106 444
- US-A1- 2007 264 557
- US-A1- 2010 068 588

## Description

### DOMAINE TECHNIQUE GENERAL

La présente invention concerne le domaine des piles à combustible, et vise plus particulièrement les piles à combustibles destinées à des applications dans le domaine de l'aéronautique.

### ETAT DE L'ART

Les piles à combustible présentent un principe de fonctionnement associé à des réactions électrochimiques aux électrodes séparées par un électrolyte. Dans le cas de piles à combustible à H2 et O2, les réactions électrochimiques conduisent à la génération d'eau, d'électricité et de chaleur.

Les piles à combustible à membrane échangeuse de protons sont composées entre autres de plaques bipolaires. Ces plaques bipolaires sont typiquement formées par assemblage de tôles fines mises en forme et assemblées deux à deux, de manière à former des canaux de refroidissement dans lesquels circule un fluide caloporteur, des canaux de réactifs pour la circulation des réactifs, et des surfaces de support pour le positionnement et la compression d'éléments d'étanchéité assurant l'étanchéité des différents circuits de fluide caloporteur et de réactifs.

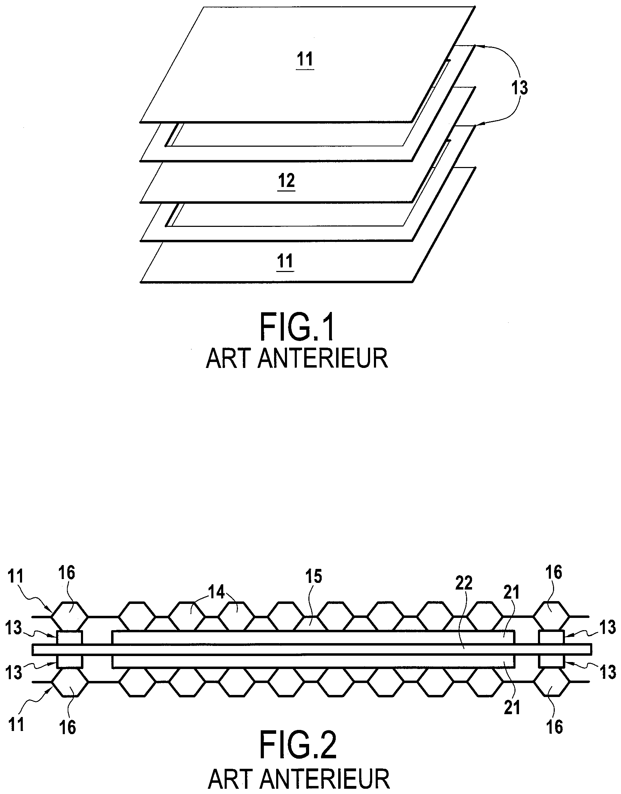

On représente ainsi sur la figure 1 une structure conventionnelle d'un empilement de pile à combustible à membrane échangeuse de protons, formée d'un assemblage de plaques bipolaires 11, entre lesquelles sont disposées des membranes échangeuses de protons 12 et des éléments d'étanchéité 13.

La figure 2 présente une vue en coupe d'un tel empilement. On y distingue ainsi les plaques bipolaires 11 formées par un assemblage de tôles minces mises en forme, de manière à former des conduits primaires 14 communément utilisés pour la circulation de fluide caloporteur assurant le refroidissement de l'empilement.

L'empilement des plaques bipolaires 11 délimite également des conduits secondaires 15 entre deux plaques bipolaires 11 adjacentes, ces conduits secondaires étant séparés par l'« Assemblage Membrane-Electrodes » ou « AME » 12, lui-même constitué de deux électrodes 121 et d'une membrane échangeuse de protons 122, de manière à permettre la circulation de deux réactifs de la pile à combustible dans les deux parties des conduits secondaires ainsi délimitées.

Les tôles constituant les plaques bipolaires 11 comportent également des zones de support 16 permettant d'appliquer un effort de compression sur les éléments d'étanchéité 13, ces éléments d'étanchéité 13 étant en conséquence comprimés entre les plaques bipolaires 11 et l'AME 12.

Les conduits primaires 14 définissent des surfaces d'assemblage entre les plaques bipolaires et les AME 12.

Les structures des tôles fines constituant les plaques bipolaires qui définissent les conduits primaires 14, les conduits secondaires 15 et les zones de support 16 peuvent définir des formes de différentes géométries, identiques ou non. Sur la figure 2, les conduits primaires 14, les conduits secondaires 15 et les zones de support 16 présentent des formes identiques hexagonales.

Les éléments d'étanchéité 13 peuvent présenter différentes géométries, à section parallélépipédique ou circulaire ou autre. Les éléments d'étanchéité 13 assurent leur fonction d'étanchéité lorsque ceux-ci sont comprimés par un effort de compression, effort de compression lui-même transmis par les zones de support 16 des plaques bipolaires 11. En conséquence, les plaques bipolaires 11 ainsi formées de tôles assemblées peuvent se déformer et présenter des gondolements, notamment du fait de contraintes résiduelles issues des procédés de fabrication des tôles, ou en raison de l'effort appliqué au niveau des zones de support 16 supportant les éléments d'étanchéité 13.

### PRESENTATION DE L'INVENTION

La présente invention vise ainsi à remédier au moins partiellement à ces problématiques, et propose une plaque bipolaire pour la réalisation d'un empilement de pile à combustible à membrane échangeuse de protons, ladite plaque bipolaire étant composée de tôles mises en forme et assemblées de manière à définir des canaux primaires d'acheminement de fluide et des canaux secondaires d'acheminement de fluide disposés de manière alternée, lesdits canaux primaires étant formés entre lesdites tôles assemblées,
la plaque bipolaire étant caractérisée en ce qu'elle comprend un renfort mécanique réalisé en matériau métallique disposé dans un conduit de renfort de la plaque bipolaire, ledit renfort mécanique étant configuré de manière à s'opposer à un effort de compression appliqué sur la plaque bipolaire, ladite plaque bipolaire comprenant en outre une source de courant électrique, adaptée pour alimenter en courant le renfort mécanique, et ainsi dégager de la chaleur par effet Joule.

L'invention permet ainsi à la fois de renforcer la résistance de la pile à combustible à un effort de compression, et également de réaliser une fonction de montée en température de la pile à combustible notamment lors de sa mise en service.

On présente ci-après plusieurs caractéristiques optionnelles de cette plaque bipolaire, pouvant être prises indépendamment ou en combinaison :
- le renfort mécanique forme un cadre, entourant tout ou partie des canaux primaires et secondaires de la plaque bipolaire ;
- ledit renfort mécanique s'étend selon toute l'épaisseur de la plaque bipolaire ;
- ledit renfort mécanique est réalisé en matériau métallique ; la plaque bipolaire peut alors comprendre en outre une source de courant électrique, adaptée pour alimenter en courant le renfort mécanique, et ainsi dégager de la chaleur par effet Joule ;
- ledit renfort mécanique est une poutre ayant une section en I, ou une section rectangulaire creuse.

L'invention concerne également une pile à combustible comprenant un empilement selon une direction normale d'une pluralité de cellules élémentaires disposées entre deux plaques terminales, chaque cellule élémentaire comprenant des plaques bipolaires telles que définies précédemment et un assemblage membrane-électrodes, les renforts mécaniques desdites plaques bipolaires s'opposant à un effort de compression appliqué sur l'empilement selon la direction normale.

Lesdites plaques bipolaires formant l'empilement sont par exemple identiques.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 décrite précédemment présente la structure générale d'une pile à combustible à membrane échangeuse de protons.
- La figure 2 décrite précédemment présente une vue en coupe d'un empilement d'une telle pile à combustible.
- La figure 3 présente schématiquement un exemple de plaque bipolaire de pile à combustible selon un aspect de l'invention.
- La figure 4 présente un empilement de telles plaques bipolaires.
- Les figures 5 à 7 présentent plusieurs modes de réalisation particuliers d'une telle plaque bipolaire.

Sur l'ensemble des figures, les éléments en commun sont repérés par des références numériques identiques.

### DESCRIPTION DETAILLEE

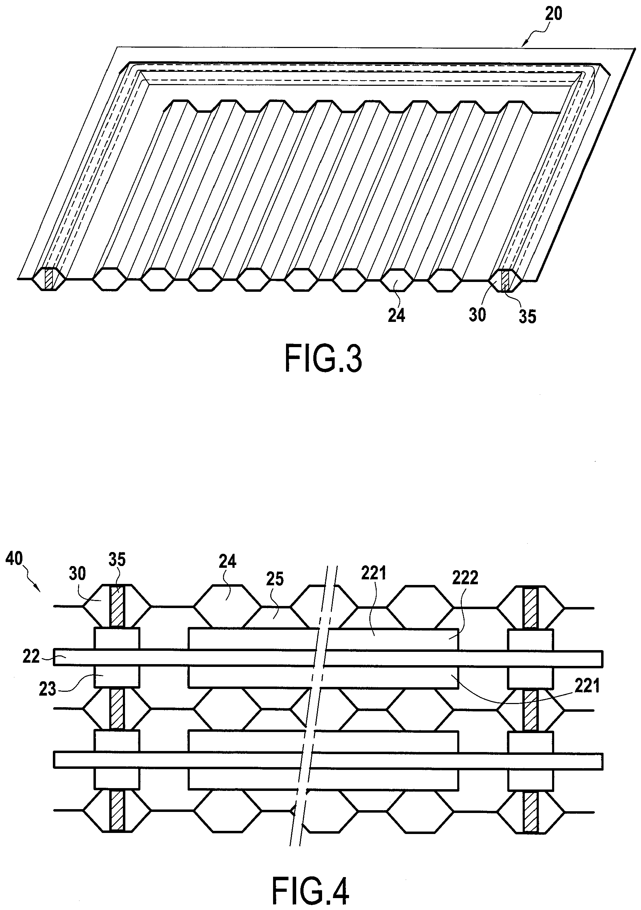

La figure 3 présente schématiquement un exemple de plaque bipolaire de pile à combustible selon un aspect de l'invention, et la figure 4 présente un empilement de telles plaques bipolaires.

On représente sur ces figures une plaque bipolaire 20, formée par assemblage de tôles mises en forme, définissant ainsi une pluralité de conduits primaires 24 au sein de la plaque bipolaire 20, délimités par les deux tôles formant la plaque bipolaire 20.

Dans le mode de réalisation représenté, les conduits primaires 24 ont une section hexagonale, et sont séparés par des bandes au niveau desquelles les tôles formant la plaque bipolaire 20 sont assemblées, par exemple par soudage. Les conduits primaires 24 définissent ainsi une face supérieure et une face inférieure de la plaque bipolaire 20, définies par les faces planes des conduits primaires 24 définissant l'épaisseur maximale de la plaque bipolaire 20.

Les plaques bipolaires 20 sont superposées afin de former un empilement de pile à combustible, communément désigné « stack » selon la terminologie anglo-saxonne. Des assemblages membrane-électrode 22, désignés par l'acronyme « AME » 22, comprenant deux électrodes 221 entourant une membrane échangeuse de protons 222 sont intercalées entre deux plaques bipolaires 20 successives, de manière à définir les interfaces d'échanges entre réactifs circulant dans les conduits secondaire 25.

Les plaques bipolaires 20 sont empilées selon une direction normale au plan médian des plaques bipolaires 20, le plan médian des plaques bipolaires 20 étant défini par les surfaces planes accolées des tôles formant les plaques bipolaires 20.

Comme représenté sur la figure 4, la superposition de plaques bipolaires 20 et des AME 22 forme en effet des conduits secondaires 25 pour la circulation de réactifs entre les plaques bipolaires et les AME, par exemple de l'oxygène et de l'hydrogène, tandis que les conduits primaires 24 permettent la circulation d'un fluide caloporteur assurant notamment le refroidissement de l'empilement.

Dans le mode de réalisation représenté, les conduits secondaires 25 ont une section trapézoïdale, et les conduits primaires 24 et secondaires 25 sont arrangés en quinconce.

Les AME 22 séparent les conduits secondaires 25 de deux plaques bipolaires 2 adjacentes pour la circulation de deux réactifs de part et d'autre de l'AME 22.

Des éléments d'étanchéité 23 sont disposés à l'interface entre les plaques bipolaires 20 et les AME adjacentes 22, entre les zones de support 30, de manière à assurer l'isolation entre les conduits secondaires 25 et le milieu extérieur. Un élément d'étanchéité 23 est ainsi interposé entre chaque interface AME 22 / plaque bipolaire 20.

En plus de ces conduits primaires 24 et secondaires 25, les plaques bipolaires 20 comprennent des conduits de renfort 30, formés entre les tôles assemblées constituant chacune des plaques bipolaires 20, dans lesquels sont disposés des renforts mécaniques 35.

Ces conduits de renfort 30 ont par exemple, mais pas nécessairement, une géométrie identique à celle des conduits primaires 24, à savoir une section hexagonale dans le mode de réalisation représenté sur les figures, et ont ainsi une épaisseur identique à celle des conduits primaires 24, l'épaisseur étant mesurée selon la direction normale au plan médian de la plaque bipolaire 20 considérée.

Les renforts mécaniques 35 sont disposés dans les conduits de renfort 30, et sont configurés de manière à s'opposer à un effort de compression appliqué sur la plaque bipolaire 20, par exemple lors de l'application d'un effort sur la face supérieure et/ou inférieur de la plaque bipolaire 20.

Les renforts mécaniques 35 opposent alors une résistance mécanique supérieure à celle qu'aurait opposée la plaque bipolaire 20, de manière à s'opposer à une déformation de la plaque bipolaire 20, notamment lors de l'application d'un effort de compression de la plaque bipolaire 20.

Les renforts mécaniques 35 peuvent être fixés aux plaques bipolaires 20, par exemple par soudage lorsque les renforts mécaniques 35 et les plaques bipolaires 20 sont réalisées dans des matériaux appropriés.

Plus particulièrement, les renforts mécaniques 35 sont configurés pour prévenir d'éventuelles déformation des plaques bipolaires 20 lorsque ces dernières sont assemblées afin de former un empilement tel que présenté sur la figure 4.

En effet, pour la formation d'un tel empilement, un effort de compression est nécessairement appliqué de manière à assurer l'assemblage étanche des AME 22 et éléments d'étanchéité 23 avec les plaques bipolaires 20.

Or, les plaques bipolaires 20 présentent des propriétés mécaniques limitées, à plus fortes raisons lorsqu'elles sont formées de tôles fines assemblées. Les renforts mécaniques 35 permettent donc aux plaques bipolaires 20 de mieux résister aux efforts appliqués lors de l'assemblage, et également de s'opposer aux contraintes résiduelles issues des procédés de mise en forme des tôles formant les plaques bipolaires 20.

Comme représenté sur la figure 4, les conduits de renfort 30 et renforts mécaniques 35 sont par exemple configurés de manière à être superposés lors de l'empilement des plaques bipolaires 20, de sorte que l'effort de compression soit transmis entre les différents renforts mécaniques 35, et ne déforme les pas différents conduits primaires 24 et secondaires 25 de l'empilement ainsi formé.

Les plaques bipolaires 20 empilées sont par exemple identiques, ou présentent des renforts mécaniques 35 identiques pouvant donc être superposés.

Les conduits de renfort 30 sont par exemple configurés de manière à entourer les conduits primaires 24 et secondaires 25 des plaques bipolaires 20, et permettant ainsi de s'opposer à un fléchissement ou à un gondolement de la plaque bipolaire 20, en formant un cadre rigide autour des conduits primaires 24 et secondaires 25.

Dans le mode de réalisation représenté sur les figures 3 et 4, le renfort mécanique 35 est une poutre de section rectangulaire.

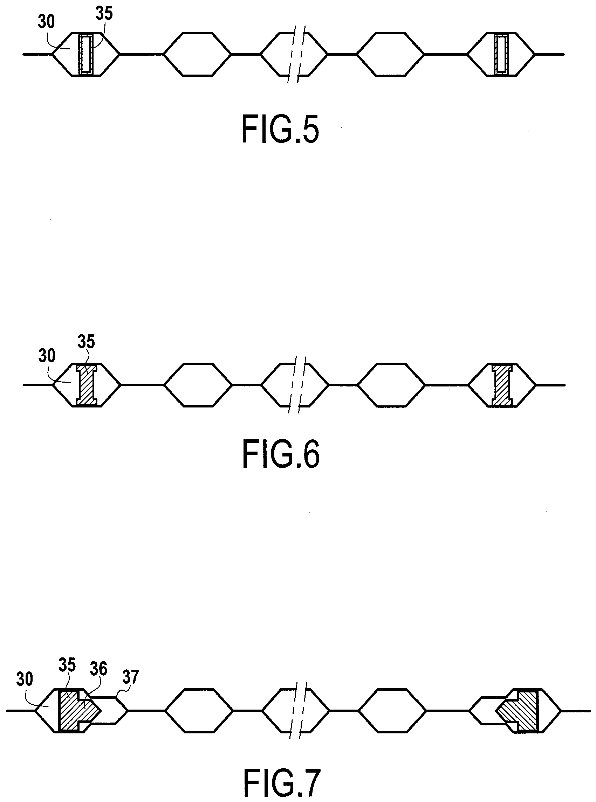

D'autres exemples de réalisation sont présentés sur les figures 5 à 7.

On représente ainsi sur la figure 5 un renfort mécanique 35 ayant une section rectangulaire creuse, ce qui est avantageux du fait du gain de masse par rapport à renfort tel qu'illustré sur les figures 3 et 4.

La figure 6 présente un autre exemple de renfort mécanique 35 ayant une section en I, ce qui améliore sa rigidité en compression tout en minimisant sa masse.

La figure 7 présente un autre exemple de renfort mécanique 35, comprenant un ergot d'indexation 36, adapté pour s'engager dans un logement 37 de forme complémentaire aménagé dans le conduit de renfort 30, de manière à assurer l'orientation et le centrage du renfort mécanique 35 dans le conduit de renfort 30. Dans l'exemple illustré sur la figure 7, le renfort mécanique 35 est de section pleine. On peut également réaliser le renfort mécanique 35 avec une section creuse, afin de minimiser sa masse.

A l'inverse, selon un mode de réalisation non représenté, le renfort mécanique 35 peut présenter une encoche ou un logement, dans lequel vient s'insérer un ergot de la plaque bipolaire 20, réalisant également une fonction de centrage et de maintien en position du renfort mécanique 35 dans le conduit de renfort 30.

Les renforts mécaniques 35 peuvent être réalisés en différents matériaux, présentant préférablement des propriétés de dilatation thermique proches de celles du matériau formant les plaques bipolaires 20, et également compatible avec le matériau formant les plaques bipolaires 20 dans le cas où les renforts mécaniques 35 sont soudés aux plaques bipolaires 20.

Parmi les matériaux pouvant être utilisés, on peut citer à titre non exhaustif et non limitatif les matériaux suivants :
- L'iconel, par exemple l'iconel 625 ; qui est communément utilisé pour la réalisation des plaques bipolaires ;
- L'alumunium, qui est avantageux en termes de masse ;
- L'inox, par exemple l'inox 316 L ou 304 L ;
- Le polyétheréthercétone (PEEK), matériau polymère thermoplastique.

En plus de la fonction d'augmentation de la résistance mécanique des plaques bipolaires 20, les renforts mécaniques 35 peuvent également réaliser une fonction additionnelle de préchauffage des plaques bipolaires lors du démarrage de la pile à combustible.

En effet, dans le cas de renforts mécaniques 35 réalisés en matériau électriquement conducteur, par exemple en cas de renforts mécaniques 35 métalliques, ces derniers peuvent être reliés à une source de courant, adaptée pour, lors du démarrage de la pile à combustible, réaliser une montée en température de la plaque bipolaire 20 par effet joule, en faisant circuler un courant électrique dans les renforts mécaniques 35.

Les différents renforts mécaniques 35 d'un empilement de pile à combustible sont ainsi par exemple reliés à une source de courant, configurée de manière à être mise en fonctionnement préalablement à la mise en fonctionnement de la pile à combustible, afin que la mise en fonctionnement de la pile à combustible s'effectue alors que cette dernière est à une température optimale. Le positionnement des renforts mécaniques 35 au sein de la pile à combustible 20 est avantageux par rapport à une source de chauffage externe à la pile à combustible, ou par rapport à des systèmes de chauffage présentant une inertie importante tels que ceux utilisant le circuit de refroidissement de la pile à combustible.

La structure proposée permet donc d'améliorer la tenue mécanique des plaques bipolaires, et donc d'améliorer la tenue mécanique de l'empilement d'une pile à combustible, mais également de s'assurer de la géométrie des plaques bipolaires en s'opposant notamment aux déformations résultant des procédés de fabrication utilisés.

En outre, la structure proposée peut être utilisée pour la réalisation d'un préchauffage des plaques bipolaires préalablement à la mise en service de la pile à combustible, ce qui est avantageux notamment pour les piles à combustible à haute température qui présentent un fonctionnement optimal dans des plages de températures élevées.

## Revendications

1. Plaque bipolaire (20) pour la réalisation d'un empilement de pile à combustible à membrane échangeuse de protons, ladite plaque bipolaire (20) étant composée de tôles mises en forme et assemblées de manière à définir des canaux primaires (24) d'acheminement de fluide et des canaux secondaires (25) d'acheminement de fluide disposés de manière alternée, lesdits canaux primaires (24) étant formés entre lesdites tôles assemblées,
la plaque bipolaire (20) étant **caractérisée en ce qu'**elle comprend un renfort mécanique (35) réalisé en matériau métallique disposé dans un conduit de renfort (30) de la plaque bipolaire (20), ledit renfort mécanique (35) étant configuré de manière à s'opposer à un effort de compression appliqué sur la plaque bipolaire (20), ladite plaque bipolaire (20) comprenant en outre une source de courant électrique, adaptée pour alimenter en courant le renfort mécanique (35), et ainsi dégager de la chaleur par effet Joule.

2. Plaque bipolaire (20) selon la revendication 1, dans laquelle ledit renfort mécanique (35) forme un cadre, entourant tout ou partie des canaux primaires (24) et secondaires (25) de la plaque bipolaire.

3. Plaque bipolaire (20) selon l'une des revendications 1 ou 2, dans laquelle ledit renfort mécanique (35) s'étend selon toute l'épaisseur de la plaque bipolaire (20).

4. Plaque bipolaire (20) selon l'une des revendications 1 à 3, dans laquelle ledit renfort mécanique (35) est une poutre ayant une section en I, ou une section rectangulaire creuse.

5. Pile à combustible comprenant un empilement selon une direction normale d'une pluralité de cellules élémentaires disposées entre deux plaques terminales, chaque cellule élémentaire comprenant des plaques bipolaires (20) selon l'une des revendications 1 à 4 et un assemblage membrane-électrodes, les renforts mécaniques desdites plaques bipolaires s'opposant à un effort de compression appliqué sur l'empilement selon la direction normale.

6. Pile à combustible selon la revendication 5, dans laquelle lesdites plaques bipolaires (20) formant l'empilement sont identiques.

## Patentansprüche

1. Bipolarplatte (20) für die Umsetzung eines Brennstoffzellenstapels mit einer Protonenaustauschmembran, wobei die Bipolarplatte (20) aus Blechen besteht, die geformt und zusammengesetzt sind, um primäre Kanäle (24) zur Beförderung von Fluid und sekundäre Kanäle (25) zur Beförderung von Fluid zu definieren, die abwechselnd angeordnet sind, wobei die primären Kanäle (24) zwischen den zusammengesetzten Blechen gebildet sind,
wobei die Bipolarplatte (20) **dadurch gekennzeichnet ist, dass** sie eine mechanische Verstärkung (35) umfasst, die aus Metallmaterial umgesetzt wird, das in einer Verstärkungsleitung (30) der Bipolarplatte (20) angeordnet ist, wobei die mechanische Verstärkung (35) ausgestaltet ist, um sich einer Druckkraft entgegenzusetzen, die auf die Bipolarplatte (20) ausgeübt wird, wobei die Bipolarplatte (20) zudem eine elektrische Stromquelle umfasst, die angepasst ist, um die mechanische Verstärkung (35) mit Strom zu versorgen und auf diese Weise Wärme durch einen Joule-Effekt abzugeben.

2. Bipolarplatte (20) nach Anspruch 1, wobei die mechanische Verstärkung (35) einen Rahmen bildet, der die gesamten oder einen Teil der primären (24) und sekundären Kanäle (25) der Bipolarplatte umgibt.

3. Bipolarplatte (20) nach einem der Ansprüche 1 oder 2, wobei sich die mechanische Verstärkung (35) über die gesamte Dicke der Bipolarplatte (20) erstreckt.

4. Bipolarplatte (20) nach einem der Ansprüche 1 bis 3, wobei die mechanische Verstärkung (35) ein Träger ist, der einen Abschnitt in I-Form oder einen rechtwinkligen, hohlen Abschnitt aufweist.

5. Brennstoffzelle, die einen Stapel mehrerer Einzelzellen in einer normalen Richtung umfasst, die zwischen zwei Endplatten angeordnet sind, wobei jede Einzelzelle Bipolarplatten (20) nach einem der Ansprüche 1 bis 4 und eine Membranelektrodenanordnung umfasst, wobei sich die mechanischen Verstärkungen der Bipolarplatten einer Druckkraft entgegensetzen, die auf den Stapel in der normalen Richtung ausgeübt wird.

6. Brennstoffzelle nach Anspruch 5, wobei die Bipolarplatten (20), die den Stapel bilden, identisch sind.

## Claims

1. A bipolar plate (20) for making a proton-exchange membrane fuel cell stack, said bipolar plate (20) being made up of metal sheets that are shaped and assembled together in such a manner as to define primary fluid-flow channels (24) and secondary fluid-flow channels (25) that are arranged in alternation, said primary channels (24) being formed between said assembled-together sheets;
the bipolar plate (20) being **characterized in that** it includes mechanical reinforcement (35) made out of metal material arranged in a reinforcing duct (30) of the bipolar plate (20), said metal reinforcement (35) being configured in such a manner as to oppose a compression force applied to the bipolar plate (20), said bipolar plate (20) further including a source of electricity adapted to feed electric current to the mechanical reinforcement (35) and thereby give off heat by the Joule effect.

2. A bipolar plate (20) according to claim 1, wherein said mechanical reinforcement (35) forms a frame surrounding the primary and secondary channels (24, 25) of the bipolar plate, in full or in part.

3. A bipolar plate (20) according to claim 1 or claim 2, wherein said mechanical reinforcement (35) extends through the entire thickness of the bipolar plate (20).

4. A bipolar plate (20) according to any one of claims 1 to 3, wherein said mechanical reinforcement (35) is a beam presenting an I section or a hollow rectangular section.

5. A fuel cell comprising a stack in a normal direction of a plurality of individual cells arranged between two terminal plates, each individual cell comprising bipolar plates (20) according to any one of claims 1 to 4 and a membrane electrode assembly, the mechanical reinforcement of said bipolar plates opposing a compression force applied to the stack in the normal direction.

6. A fuel cell according to claim 5, wherein said bipolar plates (20) forming the stack are identical.
